(19) Europäisches Patentamt / European Patent Office / Office européen des brevets

(11) **EP 4 403 896 A1**

(12) **EUROPEAN PATENT APPLICATION**
published in accordance with Art. 153(4) EPC

(43) Date of publication:
**24.07.2024 Bulletin 2024/30**

(21) Application number: **22869056.6**

(22) Date of filing: **02.09.2022**

(51) International Patent Classification (IPC):
**G01M 11/00** $^{(2006.01)}$

(86) International application number:
**PCT/CN2022/116862**

(87) International publication number:
**WO 2023/040685 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.09.2021 CN 202111088009**

(71) Applicant: **Hangzhou Hikrobot Co., Ltd.
Hangzhou, Zhejiang 310051 (CN)**

(72) Inventors:
• **YANG, Xu**
  **Hangzhou, Zhejiang 310051 (CN)**
• **DENG, Zhihui**
  **Hangzhou, Zhejiang 310051 (CN)**

(74) Representative: **Goddar, Heinz J.
Boehmert & Boehmert
Anwaltspartnerschaft mbB
Pettenkoferstrasse 22
80336 München (DE)**

(54) **SYSTEM CALIBRATION METHOD AND APPARATUS FOR LINE LASER DEVICE**

(57) The present disclosure provides a system calibration method and apparatus for line laser device. In the present disclosure, the scan data output by the line laser device after scanning the calibration object can be obtained, and then the prediction size of the calibration object can be predicted based on the scan data and the plurality of sets of prediction calibration parameters, therefore the target calibration parameters for the system calibration can be determined based on the prediction size and the known calibration size of the calibration object.

S301

Obtain scan data when the line laser device scans the at least one calibration object at different scan time points during a process of the motion mechanism driving the at least one calibration object through the laser line region range

S302

Predict, based on the scan data of the at least one calibration object, and a plurality of sets of prediction calibration parameters predicted for system calibration of the line laser device, a prediction size of each of the at least one calibration object, and determine, based on the prediction size and the known calibration size of each of the at least one calibration object, target calibration parameters, for the system calibration of the line laser device, from the plurality of sets of prediction calibration parameters

FIG. 3

**Description**

**CROSS REFERENCE TO RELATED APPLICATIONS**

This application claims priority to Chinese Patent Application No. 202111088009.9 filed on September 16, 2021, the entire content of which is incorporated herein by reference.

**TECHNICAL FIELD**

The present disclosure relates to the field of artificial intelligence technologies, and in particular to a system calibration method and apparatus for line laser device.

**BACKGROUND**

System calibration for a line laser device refers to the calibration of a relationship between the line laser device and a motion mechanism, such as calibrating the coordinate system transformation between the line laser device and the motion mechanism, the movement speed of the motion mechanism, and so on. Optionally, the motion mechanism herein may be a moving conveyor belt.

Currently, the conventional system calibration method for line laser device is implemented through the use of a calibration plate. For example, the method may be as follows: using an optical camera to take images of the calibration plate at the front and rear positions during movement along the motion mechanism, calculating the coordinate values of a plurality of designated points on the calibration plate in the coordinate system of the camera according to the predetermined internal parameters of the camera; using a measuring tool to determine the coordinate values of the designated points in the coordinate system of the motion mechanism while the two images are taken; and determining a transformation matrix between the coordinate system of the camera and the coordinate system of the motion mechanism according to a plurality of sets of coordinate values of the designated points, respectively, in the coordinate system of the camera and the coordinate system of the motion mechanism. Thereby the systematic calibration of the line laser device is realized.

However, there are many inconveniences in the conventional system calibration method for line laser device. For example, in the above-mentioned method of using the calibration plate, the coordinate value of a designated point is usually estimated by using a measuring tool and the grid of the calibration plate. If the accuracy of the calibration plate or the accuracy of the measuring tool is low, the error in the coordinate value obtained by the measurement is also large, as a result, the reliability of the calibration result is affected.

SUMMARY

In view of this, embodiments of the present disclosure provide a system calibration method for line laser device as an alternative to the conventional system calibration method for line laser device, to avoid the above-mentioned inconveniences of the conventional system calibration method for line laser device in the related art.

Specifically, the present disclosure is realized by the following technical solution.

According to a first aspect of embodiments of the present disclosure, there is provided a system calibration method for line laser device, which is used to calibrate a relationship between a line laser device and a motion mechanism. At least one calibration object is provided on the motion mechanism. The at least one calibration object has a known calibration size in a first coordinate system. The first coordinate system is a coordinate system in which the motion mechanism is located, and an initial position of the at least one calibration object on the motion mechanism is outside a laser line region range of the line laser device. The method includes:

> obtaining scan data when the line laser device scans the at least one calibration object at different scan time points during a process of the motion mechanism driving the at least one calibration object through the laser line region range, where for each of the at least one calibration object, the scan data includes scan time information and coordinate information of at least one position point on the calibration object scanned by the line laser device in a second coordinate system, and the second coordinate system is a coordinate system in which the line laser device is located; and
> predicting, based on the scan data of the at least one calibration object, and a plurality of sets of prediction calibration parameters predicted for system calibration of the line laser device, a prediction size of each of the at least one calibration object, and determining, based on the prediction size and the known calibration size of each of the at least one calibration object, target calibration parameters, for the system calibration of the line laser device, from the plurality of sets of prediction calibration parameters.

According to a second aspect of embodiments of the present disclosure, there is provided a system calibration apparatus for line laser device, which is used to calibrate a relationship between a line laser device and a motion mechanism. At least one calibration object is provided on the motion mechanism. The at least one calibration object has a known calibration size in a first coordinate system. The first coordinate system is a coordinate system in which the motion mechanism is located, and an initial position of the at least one calibration object on the motion mechanism is outside a laser line region range of the line laser device.

The apparatus includes:

a scan data obtaining unit, configured to obtain scan data when the line laser device scans the at least one calibration object at different scan time points during a process of the motion mechanism driving the at least one calibration object through the laser line region range, where for each of the at least one calibration object, the scan data includes scan time information and coordinate information of at least one position point on the calibration object scanned by the line laser device in a second coordinate system, and the second coordinate system is a coordinate system in which the line laser device is located; and

a calibration parameter determination unit, configured to predict, based on the scan data of the at least one calibration object, and a plurality of sets of prediction calibration parameters predicted for system calibration of the line laser device, a prediction size of each of the at least one calibration object, and determine, based on the prediction size and the known calibration size of each of the at least one calibration object, target calibration parameters, for the system calibration of the line laser device, from the plurality of sets of prediction calibration parameters.

According to a third aspect of embodiments of the present disclosure, there is provided an electronic device including: a processor;

a memory for storing machine-executable instructions;

where the machine-executable instructions corresponding to system calibration for a line laser device, when read and executed by a processor, cause the processor to perform the system calibration method for line laser device of the first aspect.

the embodiments of the present disclosure realizes that the scan data output by the line laser device after scanning the calibration object is obtained, and then a prediction size of the calibration object is predicted based on the scan data, and the plurality of sets of prediction calibration parameters, thereby the target calibration parameters for the system calibration can be determined based on the prediction size and the calibration size of the calibration object. According to the method of the present embodiments, there is no need to resort to a measuring tool and manual measurement, therefore the error caused by the accuracy of the tool and the manual measurement is avoided, and the reliability of the system calibration is improved.

## BRIEF DESCRIPTION OF THE DRAWINGS

FIG. 1 is a schematic diagram illustrating a scenario of using a calibration plate to perform a systematic calibration according to an example.
FIG. 2a is a schematic diagram illustrating an application scenario according to an embodiment of the present disclosure.
FIG. 2b is a schematic diagram illustrating an application scenario according to another embodiment of the present disclosure.
FIG. 3 is a flowchart illustrating a system calibration method for line laser device according to an embodiment of the present disclosure.
FIG. 4 is a flowchart illustrating a system calibration method for line laser device according to another embodiment of the present disclosure.
FIG. 5 is a flowchart illustrating a system calibration method for line laser device according to yet another embodiment of the present disclosure.
FIG. 6 is a flowchart illustrating a method for determining prediction calibration parameters according to an embodiment of the present disclosure.
FIG. 7 is a flowchart illustrating a method for determining a prediction size according to an embodiment of the present disclosure.
FIG. 8 is a structural schematic diagram illustrating an electronic device according to an embodiment of the present disclosure.
FIG. 9 is a block diagram illustrating a system calibration apparatus for line laser device according to an embodiment of the present disclosure.

## DETAILED DESCRIPTION OF THE EMBODIMENTS

Examples will be described in detail herein, with the illustrations thereof represented in the drawings. Where the following description relates to the drawings, unless otherwise indicated, the same numerals in different drawings represent the same or similar elements. Implementations described in the following examples do not represent all implementations consistent with the present disclosure. On the contrary, they are examples of an apparatus and a method consistent with some aspects of the present disclosure described in detail in the appended claims.

The terms used in the present disclosure are for the purpose of describing particular embodiments only and are not intended to limit the present disclosure. Terms like "a", "the" and "said" in their singular forms in the present disclosure and the appended claims are also intended to include plurality, unless clearly indicated otherwise in the context. It will also be understood that as used herein, the term "and/or" is and includes any or all combinations of one or more of the associated listed items.

It is to be understood that, although terms "first," "second," "third," and the like may be used in the present disclosure to describe various information, such information should not be limited to these terms. These terms are used only to distinguish the same type of information from each other. For example, without departing from the scope of the present disclosure, first information may be referred as second information; and similarly, second information may also be referred as first information. Depending on the context, as used herein, the wording "if' may be interpreted as "while..." or "when..." or "in response to a determination".

Three-dimensional reconstruction is a very important technology in the field of artificial intelligence, and it is a common method to scan an object by using a line laser device to determine the coordinates of the object, so as to perform the three-dimensional reconstruction based on the coordinates of the object.

The line laser device usually includes a camera and a line laser sensor. The line laser sensor can output laser and form a laser plane. The camera can receive the laser reflected by the object when the object passes through the laser plane. Therefore, the line laser device can determine the coordinates of a plurality of position points on the scanned object, according to the laser emitted by the sensor and the reflected laser received by the camera, with the principle of triangulation.

It will be understood that the coordinate determined by the line laser device is a coordinate in the coordinate system established by the line laser device according to itself, for example, a coordinate system established with a laser source as an origin and the laser plane as an xOz plane.

In practical applications, it is usually necessary to convert the coordinates of the object in the coordinate system established by the line laser device to a coordinate system designated by a user. Generally, the coordinate system designated by the user can be a coordinate system established in accordance with the movement of the object, for example, a movement direction of the object can be a coordinate axis, and a movement plane of the object is a coordinate plane. In the related art, it is usually possible to determine the calibration parameters of system calibration, and then directly convert the coordinates output by the line laser device into the coordinate system designated by the user according to the calibration parameters.

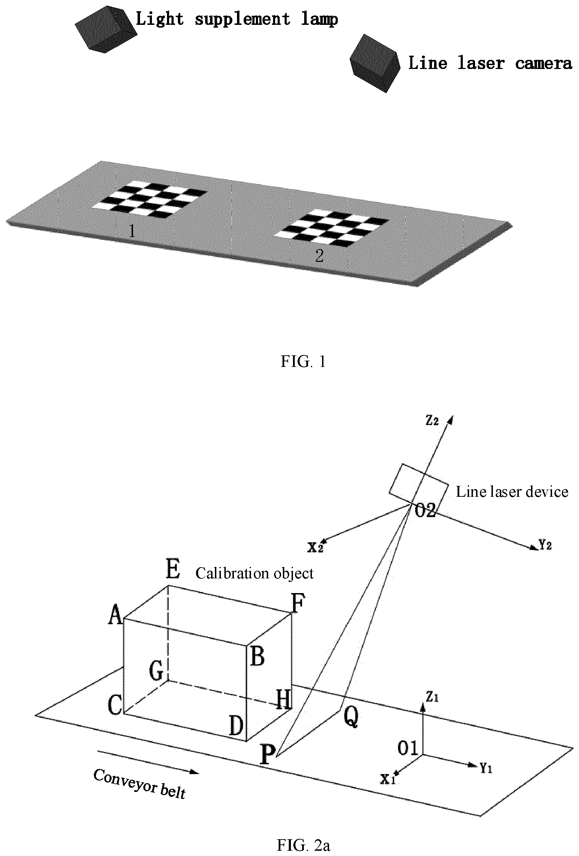

In the related art, the conventional system calibration method for line laser device is usually performed by using the calibration plate. For example, in the measurement system shown in FIG. 1, the motion mechanism is a conveyor belt, and the calibration plate can be arranged on the conveyor belt, which drives the calibration plate to move when the conveyor belt moves. Firstly, the line laser device uses the camera to capture the images of the calibration plate at the front and back positions when moving along the conveyor belt, and then with the help of the internal parameters of the camera obtained in advance, the coordinates of a plurality of designated points on the calibration plate in the coordinate system of the camera are calculated. At the same time, when the two images are captured, the coordinate values of the designated points in the coordinate system of the conveyor belt are determined by the measuring tool, such as a scale. Therefore, the transformation parameters between the two coordinate systems are determined according to a plurality of sets of coordinate values of the designated points in the coordinate system of the camera and the coordinate system of the conveyor belt respectively. However, there are many inconveniences in this conventional system calibration method, such as a need for a user to measure manually through the measuring tool, complicated operations, and an error caused by the accuracy of the tool and the manual measurement may, as a result, the reliability of the system calibration is low.

In view of this, the present disclosure proposes a system calibration method for line laser device, which can avoid the inconvenience of the system calibration method for line laser device in the related art, and the method of the present disclosure is easy to operate and highly reliable.

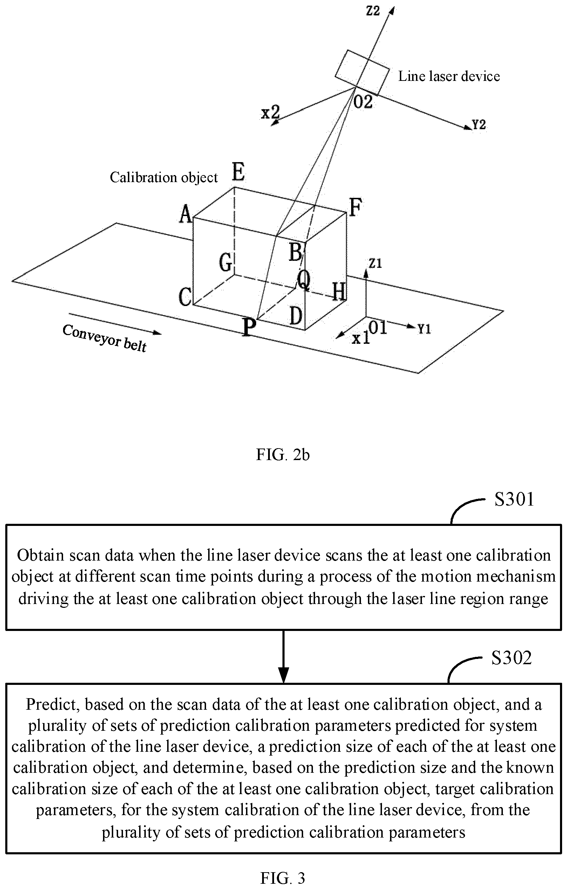

FIG. 2a is a schematic diagram illustrating an application scenario according to an embodiment of the present disclosure, and in FIG. 2a, the motion mechanism is a conveyor belt, and the calibration object is a cuboid ABCDEFGH. The calibration object is disposed on the conveyor belt, and the initial position of the calibration object is outside a laser line region range of the line laser device. It will be understood that the laser line region range herein can be regarded as a laser plane, that is, the O2PQ plane shown in FIG. 2a. When the conveyor belt moves, the conveyor belt can drive the calibration object to pass through the laser line region range, for example, as shown in FIG. 2b, the laser line emitted by the line laser device can scan the calibration object until the calibration object completely passes through the laser line region range.

Of course, the application scenario shown in FIG. 2a is only an exemplary illustration, and the motion mechanism may also be other motion devices, the calibration object may be of other shapes, which is not limited by this embodiment.

According to the application scenario in FIG. 2a, the embodiment of the present disclosure provides a system calibration method for line laser device, which is used to calibrate a relationship between a line laser device and a motion mechanism. At least one calibration object is provided on the motion mechanism. The at least one calibration object has a known calibration size in a first coordinate system. The first coordinate system is a coordinate system in which the motion mechanism is located, and an initial position of the at least one calibration object on the motion mechanism is outside a laser line region range of the line laser device.

Referring to FIG. 3, FIG. 3 is a flowchart illustrating a system calibration method for line laser device according to an embodiment of the present disclosure. The method can be applied to an electronic device, such as a server, a personal computer (PC), etc. the electronic device can interact with the line laser device to obtain relevant data from the line laser device. In this embodiment, the method may include steps S301 to S302.

At step S301, scan data is obtained when the line laser device scans the at least one calibration object at different scan time points during a process of the motion mechanism driving the at least one calibration object to pass through the laser line region range.

For each of the at least one calibration object, the scan data includes scan time information and coordinate information of at least one position point on the calibration object scanned by the line laser device in a second coordinate system, and the second coordinate system is a coordinate system in which the line laser device is located.

In this embodiment, the first coordinate system may be a coordinate system set according to the motion mechanism. For example, in the first coordinate system, the movement plane of the motion mechanism is taken as an xOy plane, and the movement direction of the motion mechanism is taken as a y-axis. For example, the coordinate system O1X1Y1Z1 shown in FIG. 2a, which takes a designated point O1 on the conveyor belt as the origin, takes the horizontal right as the Y axis, and takes the vertical up as the Z axis.

Of course, the first coordinate system can also be set in other ways, which is by this embodiment.

It will be understood that the calibration size of the calibration object in the first coordinate system is consistent with the actual size of the calibration object in the world coordinate system. The electronic device can obtain the calibration size of the calibration object in advance, for example, the electronic device can determine the calibration size according to the instruction of the user.

In this embodiment, the calibration size may include a side length of each side of the calibration object. Generally speaking, in order to facilitate operation, it is usually possible to select a calibration object with a more regular shape, for example, the calibration object may be a cuboid, and side lengths of three sides of the cuboid may be obtained; or the calibration object may be a cube, and a side length of a side of the cube may be obtained.

In this embodiment, the motion mechanism can drive the calibration object to move and pass through the laser line region range, and the calibration object moves from outside the laser line region range, to entering the laser line region range, and then to leaving the laser line region range. During the process of the calibration object crossing the laser line region range, the line laser device scans the calibration object at different scan time points, and outputs scan time information corresponding to the scan time points, and coordinate information of a plurality of position points on the calibration object corresponding to the time information.

In this embodiment, the scan time information output by the line laser device may be a specific time stamp or a frame number for scanning. the electronic device, after obtaining the scan data from the line laser device, may determine a time difference between the scan data of the scan corresponding to the scan time information and the scan data output by the line laser device when first scanning the calibration object. For example, the time difference may be determined based on a difference between the timestamps or the time difference may be determined based on a product of a frame number difference and a pre-obtained frame interval.

Alternatively, the scan time information output by the line laser device may be a time difference from the time of the first scanning to the calibration object. For example, when the calibration object is scanned for the first time, the time information recorded and output by the line laser device is 0, and when the calibration object is subsequently scanned, the line laser device can directly output the time difference from the time of the first scanning to the electronic device. Therefore, the electronic device can directly obtain the time difference without additional calculation.

In this embodiment, the coordinate information in the scan data output by the line laser device corresponds to the coordinate system established by the line laser device. For example, the coordinate system can be a coordinate system established by line laser device with the laser light source as the origin and the laser plane as the xOz plane. For example, in FIG. 2a, the laser light source is 02, and the coordinate system can be established with O2 as the origin.

At step S302, based on the scan data of the at least one calibration object, and a plurality of sets of prediction calibration parameters predicted for system calibration of the line laser device, a prediction size of each of the at least one calibration object is predicted, and based on the prediction size and the known calibration size of each of the at least one calibration object, target calibration parameters, for the system calibration of the line laser device, from the plurality of sets of prediction calibration parameters are determined.

**In** this embodiment, the calibration parameters for the system calibration of the line laser device may include a plurality of types, and for convenience of description, the plurality of types of calibration parameters may be referred to as a set of calibration parameters.

**In** this embodiment, the set of prediction calibration parameters may include at least one of the following seven types of parameters: an x-axis rotation transformation parameter $\alpha$, a y-axis rotation transformation parameter $\beta$, a z-axis rotation transformation parameter $\gamma$, an x-axis translation transformation parameter tx, a y-axis translation transformation parameter ty, and a z-axis translation transformation parameter tz between the first coordinate system and the second coordinate system, and a movement speed of the motion mechanism.

In this embodiment, the electronic device may first predict a plurality of sets of prediction calibration parameters, and the electronic device may convert the coordinate information in the scan data to the first coordinate system by performing a specified operation on each set of the plurality of sets of prediction calibration parameters and the scan data, and predict a prediction size of the calibration object based on the converted coordinate information.

For example, the calibration object may be reconstructed based on the converted coordinate information, and then information such as side length, surface area, volume, and the like of the calibration object may be determined based on a coordinate of each vertex of the calibration object.

In this embodiment, the electronic device may calculate, for each set of prediction calibration parameters, a prediction size of each calibration object under the set of prediction calibration parameters, and then determine, based on the prediction size and the calibration size of each calibration object, a deviation value, corresponding to the set of prediction calibration parameters, of each calibration object. In this embodiment, the calibration object may be one or plural in number.

In an example, when a calibration object is provided on the motion mechanism, the electronic device may use the deviation value corresponding to the calibration object, determined according to each set of prediction calibration parameters, as the deviation value corresponding to the set of prediction calibration parameters. In an example, when a plurality of calibration objects are provided on the motion mechanism, the electronic device may combine the deviation values respectively corresponding to the plurality of calibration objects determined according to each set of prediction calibration parameters. For example, the sum of the deviation values corresponding to the set of prediction calibration parameters of the plurality of calibration objects is as the deviation value corresponding to the set of prediction calibration parameters.

For example, a set 1 of prediction calibration parameters is as an example.

When a calibration object ABCDEFGH is provided, the prediction size p1 of the calibration object ABCDEFGH under the set 1 of prediction calibration parameters is calculated, and the deviation value q1 between the prediction size and the known calibration size is calculated, and the deviation value corresponding to the set 1 of prediction calibration parameters can be determined as q1.

**When** a plurality of calibration objects are provided, such as a calibration object ABCDEFGH and a calibration object A'B'C'D'E'F'G'H ', a prediction size p1 of the calibration object ABCDEFGH is calculated under the set 1 of prediction calibration parameters, a deviation value q1 of the prediction size and the calibration size is calculated, a prediction size p'1 of the calibration object A'B'C'D' E'F'G'H' is calculated, and a deviation value q'1 of the prediction size and the calibration size is calculated, therefore, the deviation value corresponding to the set 1 of prediction calibration parameters can be determined as (q1+q'1).

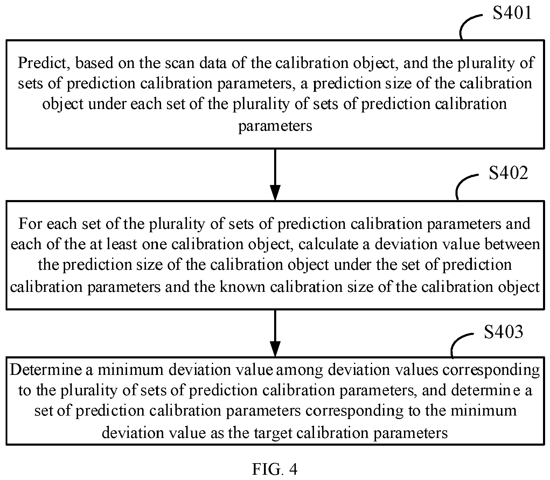

**In** this embodiment, the electronic device may determine the deviation value of each set of prediction calibration parameters according to the above-mentioned method, and subsequently, the target calibration parameters may be determined based on the deviation value of each set of prediction calibration parameters, for example, the set of prediction calibration parameters corresponding to the minimum deviation value may be determined as the target calibration parameters. Of course, other methods can also be used for determining the target calibration parameters, as detailed in the embodiments shown in FIGS. 4 to 5 below, which will not be described in this embodiment. As above, the embodiment shown in FIG. 3 has been described. According to the embodiment shown in FIG. 3, the electronic device may obtain the scan data output by the line laser device after scanning the calibration object, and then predict the prediction size of the calibration object based on the scanning data, and the prediction calibration parameters, therefore, the target calibration size for the system calibration can be determined based on the prediction size and the calibration size. According to the method of the present embodiments, there is no need to resort to a measuring tool and manual measurement, therefore the error caused by the accuracy of the tool and the manual measurement is avoided, and the reliability of the system calibration is improved.

**FIG. 4** is a flowchart illustrating a system calibration method for line laser device according to another embodiment of the present disclosure. As shown in FIG. 4, the step S302 of: predicting, based on the scan data of the at least one calibration object, and a plurality of sets of prediction calibration parameters predicted for system calibration of the line laser device, a prediction size of each of the at least one calibration object, and determining, based on the prediction size and the known calibration size of each of the at least one calibration object, target calibration parameters, for the system calibration of the line laser device, from the plurality of sets of prediction calibration parameters, may include steps S401 to S403.

At step S401, for each of the at least one calibration object, a prediction size of the calibration object under each set of the plurality of sets of prediction calibration parameters is predicted based on the scan data of the calibration object, and the plurality of sets of prediction calibration parameters.

In this embodiment, the line laser device scans the calibration object at each of different scan time points, and outputs the scan coordinates and the scan time information of the calibration object obtained from the scanning at the scan time points. For example, the scan time information may be a time stamp, or may also be a frame number, etc.

In an embodiment, the electronic device may calculate prediction size of the calibration object under each set of prediction calibration parameters based on the scan data obtained from the line laser device. For example, the electronic device can first calculate the prediction coordinates of the calibration object based on the first coordinate system under each set of prediction calibration parameters, so as to calculate the prediction size. Alternatively, the prediction size can be side lengths of several sides, surface area, volume and the like of the calibration object.

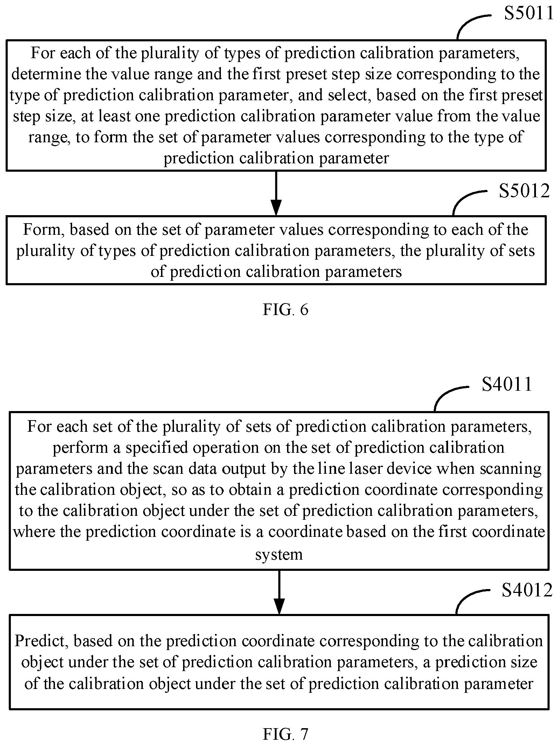

Herein, the method of calculating the prediction size of the calibration object by the electronic device will be described below in conjunction with FIG. 7 for specific embodiments, and will not be repeated in this embodiment.

At step S402, for each set of the plurality of sets of prediction calibration parameters and each of the at least one calibration object, a deviation value between the prediction size of the calibration object under the set of prediction calibration parameters and the known calibration size of the calibration object is calculated. Also, a deviation value corresponding to the set of prediction calibration parameters is determined based on the deviation value between the prediction size of each of the at least one calibration object under the set of prediction calibration parameters and the known calibration size of each of the at least one calibration obj ect.

**In** this embodiment, the electronic device may calculate, for each set of prediction calibration parameters, a deviation value corresponding to each set of prediction calibration parameters, which may be determined, for example, based on the deviation value between the prediction size under each set of prediction calibration parameters and the calibration size of the respective calibration object.

In this embodiment, the electronic device may calculate, for each set of prediction calibration parameters and each calibration object, a deviation value between the prediction size of the calibration object under the set of prediction calibration parameters and the calibration size of the calibration object.

In an example, when a calibration object is provided on the motion mechanism, for each set of prediction calibration parameters, the deviation value of the calibration object under the set of prediction calibration parameters can be as the deviation value corresponding to the set of prediction calibration parameters. In an example, when a plurality of calibration objects are provided on the motion mechanism, for each set of prediction calibration parameters, the sum of the deviation values of the plurality of calibration objects under the same set of prediction calibration parameters may be determined as the deviation value corresponding to the set of prediction calibration parameters.

The following is an example of a set GP1 of the prediction calibration parameters.

When a calibration object H is provided, the prediction size p1 of the calibration object H under the set GP1 of the prediction calibration parameters can be calculated, thus the deviation value q1 between the prediction size q1 and the known calibration size can be determined. That is, the deviation value corresponding to the set GP1 of the prediction calibration parameters is q1.

When a plurality of calibration objects (e.g., calibration objects H and H') are provided, it is possible to calculate and obtain, under the set GP1 of prediction calibration parameters: the prediction size p1 of the calibration object H, and the deviation value q1 between the prediction size p1 and the known calibration size; and the prediction size p'1 of the calibration object H', and the deviation value q'1 between the prediction size p'1 and the known calibration size. Therefore, a deviation value corresponding to the set GP1 of prediction calibration parameters is (q1+q'1).

In an embodiment, the calibration object includes at least one designated side, the known calibration size may include a calibration side length of each of the at least one designated side, and the prediction size may include a prediction side length of each of the at least one designated side. Thus, a method of determining a deviation value corresponding to each set of prediction calibration parameters by the electronic device may include:
for each of the calibration objects, calculating, for each of the at least one designated side, a deviation value between a prediction side length, under the set of prediction calibration parameters, of the designated side of the calibration object and the calibration side length of the designated side, and determining a sum of deviation value corresponding to the at least one designated side of the calibration object as the deviation value corresponding to the calibration obj ect.

For example, the designated side may include N sides of the calibration object. For each of the N sides, a deviation value between the prediction side length and the calibration side length of the side is calculated, for example, the deviation value may be an absolute value of a difference between the prediction side length and the calibration side length. A sum of the N deviation values respectively corresponding to the N sides is determined as a deviation value, under the set of prediction calibration parameters, of the calibration object.

For example, the calibration object is a cuboid. The designated sides may include the length, width and height of the cuboid. It may be determined in advance that the length, width and height of the cuboid are a, b and c, respectively. When the length, width and height of the prediction size under the set GP1 of prediction calibration parameters are a1, b1 and c1, respectively, it may be determined that the deviation value, under the set GP1 of prediction calibration parameters, corresponding to the cuboid (calibration object) is |a-a1 |+|b-b1 |+|c-c1|.

It is to be noted that in the related art of utilizing a calibration plate for system calibration, after the calibration plate is placed on the motion mechanism, a thickness of the calibration plate is usually ignored, i.e., a z-axis coordinate is considered to be 0 when determining a coordinate of a designated point on the calibration plate under the coordinate system of the camera. However, although the thickness of the calibration plate is not large, directly ignoring the thickness can cause errors and lead to unreliable system calibration. In contrast, the calibration object in the present disclosure is usually a three-dimensional object such as a cuboid, and the height of the calibration object is not ignored, therefore, the error is reduced and the reliability of the system calibration is improved.

At step S403, a minimum deviation value among deviation values corresponding to the plurality of sets of prediction calibration parameters is determined, and a set of prediction calibration parameters corresponding to the minimum deviation value is determined as the target calibration parameters.

In an embodiment, the electronic device, after determining the deviation values corresponding to each set of prediction calibration parameters, may compare the deviation values, and determine a minimum deviation value. The electronic device can determine a set of prediction calibration parameters corresponding to the minimum deviation value as the target calibration parameters.

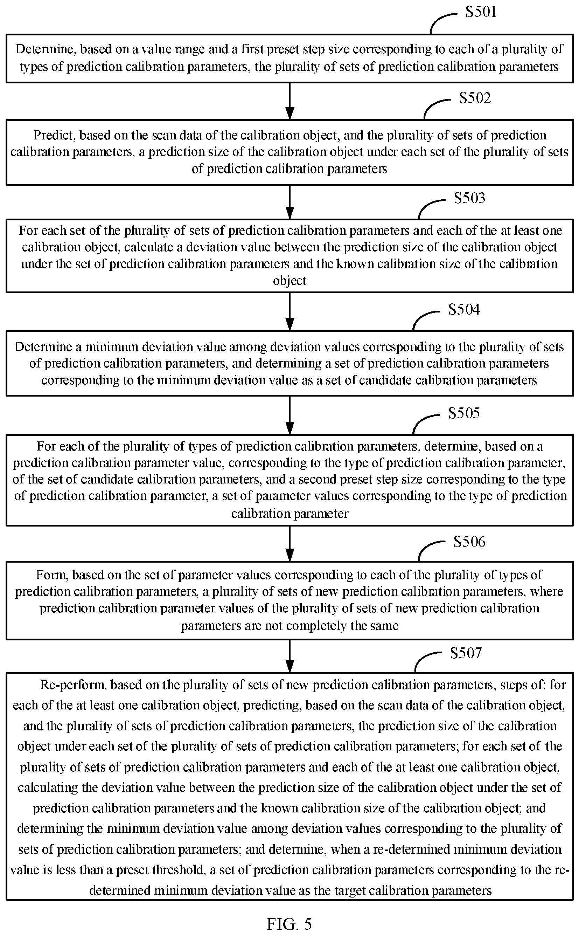

In an embodiment, in addition to the method shown in FIG. 4, the electronic device may perform the method shown in FIG. 5 to realize the step S302 of: predicting, based on the scan data of the at least one calibration object, and a plurality of sets of prediction calibration parameters predicted for system calibration of the line laser device, a prediction size of each of the at least one calibration object, and determining, based on the prediction size and the known calibration size of each of the at least one calibration object, target calibration parameters, for the system calibration of the line laser device, from the plurality of sets of prediction calibration parameters. The method shown in FIG. 5 is described in detail below.

FIG. 5 is a flowchart illustrating a system calibration method for line laser device according to another embodiment of the present disclosure. As shown in FIG. 5, the method includes steps S501 to S507.

At step S501, the plurality of sets of prediction calibration parameters are determined based on a value range and a first preset step size corresponding to each of a plurality of types of prediction calibration parameters. Each set of the plurality of sets of prediction calibration parameters includes a prediction calibration parameter value corresponding to each of the plurality of types of prediction calibration parameters.

In an embodiment, the types of the prediction calibration parameters can be determined according to the types of the target calibration parameters to be determined. For example, the target calibration parameters to be determined may include the following seven types of parameters: an x-axis rotation transformation parameter $\alpha$, a y-axis rotation transformation parameter $\beta$, a z-axis rotation transformation parameter $\gamma$, an x-axis translation transformation parameter tx, a y-axis translation transformation parameter ty, and a z-axis translation transformation parameter tz between the first coordinate system and the second coordinate system, and a movement speed of the motion mechanism, and the prediction calibration parameters will also include the seven types of parameters.

When determining the prediction calibration parameters, for each of the types of prediction calibration parameters, a value range and a first preset step size corresponding to the type of prediction calibration parameter may be determined, thereby the plurality of sets of prediction calibration parameters can be determined.

In an embodiment, the value range and the first preset step size corresponding to each type of prediction calibration parameter can be preset by the user according to the actual application situation. For example, the value range of each type of prediction calibration parameters can be determined according to the deployment mode of the line laser device and the motion mechanism. For example, in the application scenario shown in FIG. 2a, since the line laser must irradiate the surface of the object, when the laser plane of the line laser device is the xOz plane, the value ranges of the x-axis rotation transformation parameter $\alpha$ and the $\gamma$-axis rotation transformation parameter $\beta$ can both be (-pi/2, pi/2), and the value range of the z-axis rotation transformation parameter $\gamma$ can be (-pi, pi). Other parameters can also be determined according to the actual situation, for example, the movement speed of the motion mechanism can be determined according to the movement speed of the conveyor belt, such as the value range (movement speed) of (1m/s, 2m/s). The value ranges of the x-axis translation transformation parameter tx, the y-axis translation transformation parameter ty, and the z-axis translation transformation parameter tz can all be (0,10) and so on. Of course, the above-mentioned value range is only an example, which is not limited by this embodiment.

An embodiment of determining the plurality of sets of prediction calibration parameters will be described in detail below with reference to FIG. 6. As shown in FIG. 6, determining, based on the value range and the first preset step size corresponding to each of the plurality of types of prediction calibration parameters, the plurality of sets of prediction calibration parameters includes steps S5011 to S5012.

At step S5011, for each of the plurality of types of prediction calibration parameters, the value range and the first preset step size corresponding to the type of prediction calibration parameter is determined, and at least one prediction calibration parameter value is selected, based on the first preset step size, from the value range, to form the set of parameter values corresponding to the type of prediction calibration parameter.

**In** this embodiment, the electronic device may predetermine a value range and a first preset step size for each set of prediction calibration parameters, so as to select parameter values one by one within the value range based on the first preset step size to form the set of parameter values.

For example, the value range of the x-axis rotation transformation parameter $\alpha$ may be (-pi/2, pi/2), and the first preset step size may be pi/8. As a result, seven prediction calibration parameter values can be selected within this value range, which are -3pi/8, -pi/4, -pi/8, 0, pi/8, pi/4, 3pi/8. Similarly, for the y-axis rotation transformation parameter $\beta$ with the value range of (-pi/2, pi/2), seven prediction calibration parameter values can be selected according to the preset step size pi/8; for the z-axis rotation transformation parameter $\gamma$ with the value range of (-pi, pi), fifteen prediction calibration parameter values can be selected according to the preset step size pi/8. For other types of prediction calibration parameters, similar methods can also be used to determine the prediction calibration parameter values, which will not be described herein.

At step S5012, the plurality of sets of prediction calibration parameters are formed based on the set of parameter values corresponding to each of the plurality of types of prediction calibration parameters, where prediction calibration parameter values of the plurality of sets of prediction calibration parameters are not completely the same.

**In** an embodiment, the electronic device, when determining each set of prediction calibration parameters, may select one prediction calibration parameter value from the set of parameter values corresponding to each type of prediction calibration parameter to form a set of prediction calibration parameters.

**In** an embodiment, the electronic device traverses all combination cases by the same method, and can form the plurality of sets of prediction calibration parameters.

For example, when there is a total of N types of prediction calibration parameters, and a number of parameter values contained in a set of parameter values corresponding to the i-th type of prediction calibration parameters is Ai (i=1, 2, ..., N). For example, the set of parameter values corresponding to the first type of prediction calibration parameter contains A1 parameter values; the set of parameter values corresponding to the second type of prediction calibration parameter contains A2 parameter values; and the set of parameter values corresponding to the N-th type of prediction calibration parameter contains AN parameter values. Of course, the i-th type herein is only to distinguish the prediction calibration parameters of different types, but not to limit the order. Based on this, the electronic device can form M sets of prediction calibration parameters based on the sets of parameter values respectively corresponding to the N types of prediction calibration parameters, where M=A1*A2* ... *AN.

Illustrated by the example of the x-axis rotation transformation parameter $\alpha$, the y-axis rotation transformation parameter $\beta$ and the z-axis rotation transformation parameter $\gamma$ in the above-mentioned embodiments, for convenience of description, for example, a set of prediction calibration parameters only includes these three types of prediction calibration parameters (i.e., x-axis rotation transformation parameter $\alpha$, y-axis rotation transformation parameter $\beta$ and z-axis rotation transformation parameter $\gamma$). The x-axis rotation transformation parameter $\alpha$ includes seven prediction calibration parameter values, the y-axis rotation transformation parameter $\beta$ includes seven prediction calibration parameter values, and the z-axis rotation transformation parameter $\gamma$ includes fifteen prediction calibration parameter values. One parameter value is selected from the set of parameter values corresponding to each type, for example, -3pi/8 is selected from the set of parameter values corresponding to the x-axis rotation transformation parameter $\alpha$, -3pi/8 is selected from the set of parameter values corresponding to the y-axis rotation transformation parameter $\beta$, and -7pi/8 is selected from the set of parameter values corresponding to the z-axis rotation transformation parameter $\gamma$ to form a set of prediction calibration parameters { -3pi/8, -3pi /8, -7pi/8}. Using the same method, traversing all combination cases of the parameter values, 7*7* 15 sets of prediction calibration parameters can be obtained.

It is to be noted that a set of prediction calibration parameters including three types of prediction calibration parameters is only an example. For prediction calibration parameters including seven types or other number types of prediction calibration parameters, the plurality of sets of prediction calibration parameters can be obtained by the similar method, which is not repeated herein.

As above, the embodiment shown in FIG. 6 has been described. According to the embodiment shown in FIG. 6, the electronic device may determine the set of parameter values corresponding to each type of prediction calibration parameter based on the value range and the first preset step size corresponding to the type of prediction calibration parameter, so that the plurality of sets of prediction calibration parameters may be formed based on the set of parameter values corresponding to each type of prediction calibration parameter.

At step S401, for each of the at least one calibration object, a prediction size of the calibration object under each set of the plurality of sets of prediction calibration parameters is predicted based on the scan data of the calibration object, and the plurality of sets of prediction calibration parameters.

At step S503, for each set of the plurality of sets of prediction calibration parameters and each of the at least one calibration object, a deviation value between the prediction size of the calibration object under the set of prediction calibration parameters and the known calibration size of the calibration object is calculated. Also, a deviation value corresponding to the set of prediction calibration parameters is determined based on the deviation value between the prediction size of each of the at least one calibration object under the set of prediction calibration parameters and the known calibration size of each of the at least one calibration obj ect.

In this embodiment, the method of determining the prediction size, and the deviation value by the electronic device can be referred to the embodiment shown in FIG. 4, and will not be repeated herein.

At step S504, a minimum deviation value among deviation values corresponding to the plurality of sets of prediction calibration parameters is determined, and a set of prediction calibration parameters corresponding to the minimum deviation value is determined as a set of candidate calibration parameters.

In this embodiment, the electronic device can determine the minimum deviation value by referring to the method in the embodiment shown in FIG. 4. Different from the embodiment shown in FIG. 4, this embodiment does not directly take the prediction calibration parameters corresponding to the minimum deviation value as the target calibration parameters, but redetermines a set of new prediction calibration parameters based on the prediction calibration parameters corresponding to the minimum deviation value.

For example, the electronic device may determine the set of prediction calibration parameters corresponding to the minimum deviation value as a set of candidate calibration parameter, and then determine the plurality of sets of new prediction calibration parameters according to the method of steps S505 to S506.

At step S505, for each of the plurality of types of prediction calibration parameters, based on a prediction calibration parameter value, corresponding to the type of prediction calibration parameter, of the set of candidate calibration parameters, and a second preset step size corresponding to the type of prediction calibration parameter, a set of parameter values corresponding to the type of prediction calibration parameter is determined. The second preset step size is smaller than the first preset step size corresponding to the type of prediction calibration parameter.

In an embodiment, the electronic device may, for each of the plurality of types of prediction calibration parameters, obtain, by taking values, in directions of numerical value increase and numerical value decrease respectively, with the prediction calibration parameter value, corresponding to the type of prediction calibration parameter, of the set of candidate calibration parameters as a reference and with the second preset step size corresponding to the type of prediction calibration parameter as an interval, a preset number of prediction calibration parameter values as the set of parameter values corresponding to the type of prediction calibration parameter.

For example, a set of prediction calibration parameters includes the x-axis rotation transformation parameter $\alpha$, the y-axis rotation transformation parameter $\beta$, and the z-axis rotation transformation parameter $\gamma$. When the candidate calibration parameter is determined to be {-pi/8 (corresponding to $\alpha$), pi/8 (corresponding to $\beta$), and pi/4 (corresponding to $\gamma$)}, a set of parameter values corresponding to $\alpha$ may be determined according to "-pi/8" as a reference, a set of parameter values corresponding to $\beta$ may be determined according to "pi/8" as a reference, and a set of parameter values corresponding to $\gamma$ may be determined according to "pi/4" as a reference.

For each type of prediction calibration parameter, in addition to the reference in the set of candidate calibration parameters, the electronic device also presets the second preset step size corresponding to each type of candidate calibration parameter, and a preset number corresponding to each type of candidate calibration parameter. The second preset step size is smaller than the first preset step size, for example, the second preset step size may be 1/10, 1/5, 1/2, and the like of the first preset step size, and the preset number may be set by the user, for example, 5, 10, etc. Therefore, the preset number of prediction calibration parameter values are obtained by taking values, in directions of numerical value increase and numerical value decrease respectively, based on the prediction calibration parameter value corresponding to the type of prediction calibration parameter of the set of candidate calibration parameters, and with the second preset step size corresponding to the type of prediction calibration parameter as an interval. The preset number corresponding to different types of candidate calibration parameters can be the same or different.

Illustrated by the example of the prediction calibration parameter "x-axis rotation transformation parameter $\alpha$", the parameter value corresponding to the x-axis rotation transformation parameter $\alpha$ of the candidate calibration parameters is -pi/8. For example, when the second preset step size may be pi/16, and the preset number "m" may be 5 (including the parameter value in the candidate calibration parameters), the five parameter values (including the parameter value in the candidate calibration parameters) are obtained by respectively taking two values in the directions of numerical value increase and numerical value decrease, i.e., the set of parameter values {-4pi/16, -3pi/16, -2pi/16, -pi/16, and 0}. For other types of prediction calibration parameters, the corresponding set of parameter values can be determined by the similar method, which will not be repeated herein.

At step S506, a plurality of sets of new prediction calibration parameters is formed based on the set of parameter values corresponding to each of the plurality of types of prediction calibration parameters, where prediction calibration parameter values of the plurality of sets of new prediction calibration parameters are not completely the same.

In an embodiment, the method of determining a plurality of sets of new prediction calibration parameters by the electronic device to according to the set of parameter values is similar to step S5012. That is, when determining each set of new prediction calibration parameters, a prediction calibration parameter value is selected from each of the sets of parameter values corresponding to each type of prediction calibration parameter, respectively, and all the combination cases are traversed in a similar way to form the plurality of sets of new prediction calibration parameters.

At step S507, steps of: for each of the at least one calibration object, predicting, based on the scan data of the calibration object, and the plurality of sets of prediction calibration parameters, the prediction size of the calibration object under each set of the plurality of sets of prediction calibration parameters; for each set of the plurality of sets of prediction calibration parameters and each of the at least one calibration object, calculating the deviation value between the prediction size of the calibration object under the set of prediction calibration parameters and the known calibration size of the calibration object, and determining, based on the deviation value between the prediction size of each of the at least one calibration object under the set of prediction calibration parameters and the known calibration size of each of the at least one calibration object, the deviation value corresponding to the set of prediction calibration parameters; and determining the minimum deviation value among deviation values corresponding to the plurality of sets of prediction calibration parameters are re-performed based on the plurality of sets of new prediction calibration parameters; and when a re-determined minimum deviation value is less than a preset threshold, a set of prediction calibration parameters corresponding to the re-determined minimum deviation value are determined as the target calibration parameters.

In an embodiment, after determining the new prediction calibration parameters according to step S507, step S502 and step S503 may be performed again, i.e., step S502 of: predicting, based on the scan data of the calibration object, and the plurality of sets of prediction calibration parameters, a prediction size of the calibration object under each set of the plurality of sets of prediction calibration parameters, and step S503 of: calculating a deviation value between the prediction size of the calibration object under the set of prediction calibration parameters and the known calibration size of the calibration object, and determining, based on the deviation value between the prediction size of each of the at least one calibration object under the set of prediction calibration parameters and the known calibration size of each of the at least one calibration object, a deviation value corresponding to the set of prediction calibration parameters.

In an embodiment, after performing step S503 for a second time to determine the deviation value corresponding to the plurality of sets of new prediction calibration parameters, a minimum deviation value among the deviation values corresponding to the plurality of sets of new prediction calibration parameters may be determined again, and the minimum deviation value may be compared with a preset threshold. If the minimum deviation value is less than the preset threshold, the set of prediction calibration parameters corresponding to the minimum deviation value are determined to be the target calibration parameters. If the minimum deviation value is greater than or equal to the preset threshold, the error of the current system calibration may be considered too large, and the system calibration may be performed again. For example, the system calibration can be performed again according to the method described in the above embodiments after adjusting the placement position of the calibration object, adjusting the movement speed of the motion mechanism, and the like.

An embodiment of a method of predicting a prediction size of a calibration object under a set of prediction calibration parameters is described below with reference to FIG. 7. As shown in FIG. 7, predicting, based on the scan data of the calibration object, and the plurality of sets of prediction calibration parameters, a prediction size of the calibration object under each set of the plurality of sets of prediction calibration parameters includes steps S4011 to S4012.

At step S4011, for each set of the plurality of sets of prediction calibration parameters, a specified operation is performed on the set of prediction calibration parameters and the scan data output by the line laser device when scanning the calibration object, so as to obtain a prediction coordinate corresponding to the calibration object under the set of prediction calibration parameters, where the prediction coordinate is a coordinate based on the first coordinate system.

In an embodiment, the electronic device may take each set of prediction calibration parameters as an operation parameter in the specified operation, and then perform the specified operation on the scan data to obtain the corresponding prediction coordinate of each calibration object under the set of prediction calibration parameters.

For example, each set of prediction calibration parameters may include: an x-axis rotation transformation parameter $\alpha$, a y-axis rotation transformation parameter $\beta$, a z-axis rotation transformation parameter $\gamma$, an x-axis translation transformation parameter tx, a y-axis translation transformation parameter ty, and a z-axis translation transformation parameter tz between the first coordinate system and the second coordinate system, and a movement speed of the motion mechanism.

First, the electronic device can determine a rotation transformation matrix R by predicting the x-axis rotation transformation parameter $\alpha$, the y-axis rotation transformation parameter $\beta$, and the z-axis rotation transformation parameter $\gamma$ in the calibration parameters, as shown in the following formula (1).

$$R = \begin{bmatrix} r11 & r12 & r13 \\ r21 & r22 & r23 \\ r31 & r32 & r33 \end{bmatrix} =$$

$$\begin{bmatrix} \cos\beta\cos\gamma & \cos\gamma\sin\alpha\sin\beta - \cos\alpha\sin\gamma & \sin\alpha\sin\gamma + \cos\alpha\cos\gamma\sin\beta \\ \cos\beta\sin\gamma & \cos\alpha\cos\gamma + \sin\alpha\sin\beta\sin\gamma & \cos\alpha\sin\beta\sin\gamma - \cos\gamma\sin\gamma \\ -\sin\gamma & \cos\beta\sin\alpha & \cos\alpha\cos\beta \end{bmatrix} \quad (1)$$

For each of the scan data, for example, the coordinate information in the scan data is denoted as (x1, y1, z1), the individual numbers r11, r12, r13, r21, r22, r23, r31, r32, r33 in the rotational transformation matrix can be determined based on the formula (1), and at the same time, by combining the x-axis translation transformation parameter tx, the y-axis translation transformation parameter ty, and the z-axis translation transformation parameter tz in the prediction calibration parameters, a candidate prediction coordinate x2, y20, and z2 are calculated by using the following formula (2).

$$\begin{bmatrix} x2 \\ y20 \\ z2 \\ 1 \end{bmatrix} = \begin{bmatrix} r11 & r12 & r13 & tx \\ r21 & r22 & r23 & ty \\ r31 & r32 & r33 & tz \\ 0 & 0 & 0 & 1 \end{bmatrix} \begin{bmatrix} x1 \\ y1 \\ z1 \\ 1 \end{bmatrix} \quad (2)$$

The x2 and z2 in the candidate prediction coordinate are the coordinate values of the x-axis and z-axis in the prediction coordinate.

It is to be noted that since the line laser device is fixed, the coordinates in the movement direction of the motion mechanism (i.e., the direction of the y-axis in the motion mechanism) determined by the line laser device are constant. It is also necessary to combine the time information in the scan data and the speed of the motion mechanism in the prediction calibration parameters, so as to further determine the coordinate value y2 of the y-axis in the prediction coordinate which can be calculated, for example, by the following formula (3).

$$y2 = y20 + \Delta T * speed \quad (3)$$

Where "y20" is the value calculated in the formula (2); "$\Delta T$" is the time difference between the time information corresponding to the scan data and the time information corresponding to a first set of scan data, for example, the electronic device can calculate $\Delta T$ according to the time stamp corresponding to the scan data, or the electronic device can also calculate $\Delta T$ according to the frame number and the frame interval; and "speed" is the movement speed of the motion mechanism in the prediction calibration parameters. Where the first set of scan data is scan data output by the line laser device when scanning a first position of the calibration object.

It is to be noted that the above formulas are applicable to the case where the direction of the y-axis in the coordinate system of the motion mechanism is consistent with the movement direction of the motion mechanism. In other cases, a speed component in each direction can also be calculated based on the angular difference between the movement direction and the coordinate system, and determine the corresponding prediction coordinates of the calibration object by combining with the above formulas. Therefore, in practical application, the electronic device may choose other methods of determining the prediction coordinates of the calibration object according to the actual situation, which will not be repeated herein.

At step S4012, a prediction size of the calibration object under the set of prediction calibration parameters is predicted based on the prediction coordinate corresponding to the calibration object under the set of prediction calibration parameters.

In this embodiment, in step S4011, a prediction coordinate corresponding to each of the scan data may be determined. Since the scan range of the line laser device is a plane, the obtained scan data are data of each of points on a line intersecting the line laser plane (i.e., points on the contour of the calibration object), thus the obtained prediction coordinates are also coordinates of the points on the contour of the calibration object. Thus, based on the obtained coordinates of the points on the contour during the scanning process, the complete contour of the calibration object can be determined. For example, if the calibration object is a cuboid, the coordinates of the vertexes of the cuboid can be determined.

According to this embodiment, the prediction size of the calibration object can be determined based on the prediction coordinates. For example, if the calibration object is a cuboid, the side lengths of the length, width, and height of the cuboid may be determined based on the coordinates of the vertexes of the cuboid.

It is to be noted that the above steps are for a set of prediction calibration parameters to calculate prediction coordinates corresponding to a calibration object. If prediction coordinates corresponding to other calibration objects are also calculated under this set of prediction calibration parameters, as well as for other sets of prediction calibration parameters, the same method for calculation can be used, which will not be repeated herein.

It is to be noted that the movement speed of the motion mechanism is also used as a calibration parameter for the system calibration in this embodiment, i.e., the target calibration parameters determined for system calibration may include the transformation parameters of the coordinate axes and the movement speed of the motion mechanism. In other words, the target calibration parameters can be determined by the embodiments of the present disclosure while the transformation parameter of the coordinate axis and the movement speed can also be determined. In the related art, when a calibration plate is used for system calibration, it is necessary to collect at least two images with the calibration plate moving with the motion mechanism, and to measure the coordinate value in the coordinate system of the motion mechanism of a designated point on the calibration plate at the time of collecting the two images, so as to determine the movement speed of the motion mechanism. Further, the transformation parameter of the coordinate axis can be determined based on the coordinate value in the coordinate system of the motion mechanism and the coordinate value in the coordinate system of the line laser device of the designated point. The method of this embodiment does not require calculating the transformation parameters of the coordinate axes and the movement speed of the motion mechanism, such that the process of system calibration is simplified, and the efficiency of system calibration is improved.

As above, the embodiment shown in FIG. 7 has been described. According to the method shown in this embodiment, the prediction size of each of the calibration objects can be determined for each set of prediction calibration parameters. Subsequently, the embodiment shown in FIG. 4 or FIG. 5 may be used to calculate the deviation values corresponding to each set of prediction calibration parameters, thereby the target calibration parameters are determined.

Corresponding to the foregoing embodiments of the system calibration method for line laser device, the present disclosure also provides embodiments of the system calibration apparatus for line laser device.

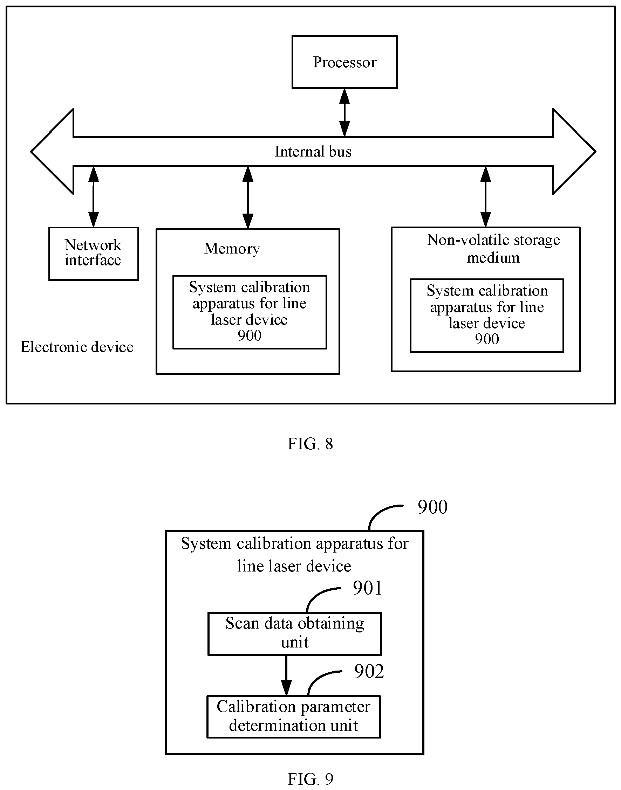

The embodiments of the system calibration apparatus for line laser device of the present disclosure may be applied to an electronic device. The apparatus embodiment can be implemented by software, or by hardware, or a combination of software and hardware. Taking software embodiment as an example, as an apparatus in a logical sense, it is formed by reading the corresponding computer program instructions in the non-volatile memory into the memory through the processor of the electronic device where it is located. In terms of hardware, as shown in FIG. 8, which is a hardware structure diagram of the electronic device where the system calibration method for line laser device of the present disclosure is located, in addition to the processor, the memory, the network interface, and the non-volatile memory shown in FIG. 8, the electronic device in which the apparatus is located in the embodiment may generally include other hardware according to the actual function of the electronic device, details of which will not be described herein.

FIG. 9 is a block diagram illustrating a system calibration apparatus for line laser device according to an embodiment of the present disclosure.

Referring to FIG. 9, the system calibration apparatus 900 for line laser device may be applied to the electronic device shown in FIG. 8. The system calibration apparatus for line laser device is used to calibrate a relationship between a line laser device and a motion mechanism. At least one calibration object is provided on the motion mechanism. The at least one calibration object has a known calibration size in a first coordinate system. The first coordinate system is a coordinate system in which the motion mechanism is located, and an initial position of the at least one calibration object on the motion mechanism is outside a laser line region range of the line laser device. The apparatus includes a scan data obtaining unit 901, and a calibration parameter determination unit 902.

The scan data obtaining unit 901 is configured to obtain scan data when the line laser device scans the at least one calibration object at different scan time points during a process of the motion mechanism driving the at least one calibration object through the laser line region range, where for each of the at least one calibration object, the scan data includes scan time information and coordinate information of at least one position point on the calibration object scanned by the line laser device in a second coordinate system, and the second coordinate system is a coordinate system in which the line laser device is located.

The calibration parameter determination unit 902 is configured to predict, based on the scan data of the at least one calibration object, and a plurality of sets of prediction calibration parameters predicted for system calibration of the line laser device, a prediction size of each of the at least one calibration object, and determine, based on the prediction size and the known calibration size of each of the at least one calibration object, target calibration parameters, for the system calibration of the line laser device, from the plurality of sets of prediction calibration parameters.

In an embodiment, the prediction size determination unit 902 is specifically configured to:

for each of the at least one calibration object, predict, based on the scan data of the calibration object, and the plurality of sets of prediction calibration parameters, a prediction size of the calibration object under each set of the plurality of sets of prediction calibration parameters;

for each set of the plurality of sets of prediction calibration parameters and each of the at least one calibration object, calculate a deviation value between the prediction size of the calibration object under the set of prediction calibration parameters and the known calibration size of the calibration object, and determine, based on the deviation value between the prediction size of each of the at least one calibration object under the set of prediction calibration parameters and the known calibration size of each of the at least one calibration object, a deviation value corresponding to the set of prediction calibration parameters; and

determining a minimum deviation value among deviation values corresponding to the plurality of sets of prediction calibration parameters, and determining a set of prediction calibration parameters corresponding to the minimum deviation value as the target calibration parameters.

In an embodiment, the prediction size determination unit 902 is specifically configured to:

determine, based on a value range and a first preset step size corresponding to each of a plurality of types of prediction calibration parameters, the plurality of sets of prediction calibration parameters, where each set of the plurality of sets of prediction calibration parameters includes a prediction calibration parameter value corresponding to each of the plurality of types of prediction calibration parameters;

for each of the at least one calibration object, predict, based on the scan data of the calibration object, and the plurality of sets of prediction calibration parameters, a prediction size of the calibration object under each set of the plurality of sets of prediction calibration parameters;

for each set of the plurality of sets of prediction calibration parameters and each of the at least one calibration object, calculate a deviation value between the prediction size of the calibration object under the set of prediction calibration parameters and the known calibration size of the calibration object, and determine, based on the deviation value between the prediction size of each of the at least one calibration object under the set of prediction calibration parameters and the known calibration size of each of the at least one calibration object, a deviation value corresponding to the set of prediction calibration parameters;

determine a minimum deviation value among deviation values corresponding to the plurality of sets of prediction calibration parameters, and determine a set of prediction calibration parameters corresponding to the minimum deviation value as a set of candidate calibration parameters;

for each of the plurality of types of prediction calibration parameters, determine, based on a prediction calibration parameter value, corresponding to the type of prediction calibration parameter, of the set of candidate calibration parameters, and a second preset step size corresponding to the type of prediction calibration parameter, a set of parameter values corresponding to the type of prediction calibration parameter, where the second preset step size is smaller than the first preset step size corresponding to the type of prediction calibration parameter;

form, based on the set of parameter values corresponding to each of the plurality of types of prediction calibration parameters, a plurality of sets of new prediction calibration parameters, where prediction calibration parameter values of the plurality of sets of new prediction calibration parameters are not completely the same; and

re-perform, based on the plurality of sets of new prediction calibration parameters, steps of: for each of the at least one calibration object, predicting, based on the scan data of the calibration object, and the plurality of sets of prediction calibration parameters, the prediction size of the calibration object under each set of the plurality of sets of prediction calibration parameters; for each set of the plurality of sets of prediction calibration parameters and each of the at least one calibration object, calculating the deviation value between the prediction size of the calibration object under the set of prediction calibration parameters and the known calibration size of the calibration object, and determining, based on the deviation value between the prediction size of each of the at least one calibration object under the set of prediction calibration parameters and the known calibration size of each of the at least one calibration object, the deviation value corresponding to the set of prediction calibration parameters; and determining the minimum deviation value among deviation values corresponding to the plurality of sets of prediction calibration parameters; and determine, when a re-determined minimum deviation value is less than a preset threshold, a set of prediction calibration parameters corresponding to the re-determined minimum deviation value as the target calibration parameters.

In an embodiment, the prediction size determination unit 902, when determining, based on the value range and the first preset step size corresponding to each of the plurality of types of prediction calibration parameters, the plurality of sets of prediction calibration parameters, is specifically configured to:

for each of the plurality of types of prediction calibration parameters, determine the value range and the first preset step size corresponding to the type of prediction calibration parameter, and select, based on the first preset step size, at least one prediction calibration parameter value from the value range, to form the set of parameter values corresponding to the type of prediction calibration parameters; and

form, based on the set of parameter values corresponding to each of the plurality of types of prediction calibration parameters, the plurality of sets of prediction calibration parameters, where prediction calibration parameter values of the plurality of sets of prediction calibration parameters are not completely the same.

In an embodiment, the prediction size determination unit 902, when determining, based on the prediction calibration parameter value, corresponding to the type of prediction calibration parameter, of the set of candidate calibration parameters, and a second preset step size corresponding to the type of prediction calibration parameter, the set of parameter values corresponding to the type of prediction calibration parameter, is specifically configured to:

for each of the plurality of types of prediction calibration parameters, obtain, by taking values, in directions of numerical value increase and numerical value decrease respectively, with the prediction calibration parameter value, corresponding to the type of prediction calibration parameter, of the set of candidate calibration parameters as a reference and with the second preset step size corresponding to the type of prediction calibration parameter as an interval, a preset number of prediction calibration parameter values as the set of parameter values corresponding to the type of prediction calibration parameter, where the second preset step size is smaller than the first preset step size corresponding to the type of prediction calibration parameter.

In an embodiment, the prediction size determination unit 902, when forming, based on the set of parameter values corresponding to each of the plurality of types of prediction calibration parameters, the plurality of sets of new prediction calibration parameters, is specifically configured to:

forming, based on sets of parameter values corresponding to N types of prediction calibration parameters, M sets of prediction calibration parameters, where M=A1 * A2* ... * AN; where Ai (i=1, 2, ..., N) represents a number of parameter values contained in the set of parameter values corresponding to the type of prediction calibration parameter;

where each set of the M sets of prediction calibration parameters is formed by selecting a prediction calibration parameter value from the set of parameter values corresponding to each of N types of prediction calibration parameters.

In an embodiment, the prediction size determination unit 902, predicting, based on the scan data of the calibration object, and the plurality of sets of prediction calibration parameters, a prediction size of the calibration object under each set of the plurality of sets of prediction calibration parameters, is specifically configured to:

for each set of the plurality of sets of prediction calibration parameters, perform a specified operation on the set of prediction calibration parameters and the scan data output by the line laser device when scanning the calibration object, so as to obtain a prediction coordinate corresponding to the calibration object under the set of prediction calibration parameters, where the prediction coordinate is a coordinate based on the first coordinate system; and predict, based on the prediction coordinate corresponding to the calibration obj ect under the set of prediction calibration parameters, a prediction size of the calibration object under the set of prediction calibration parameters.

In an embodiment, the prediction size determination unit 902, when determining, based on the deviation value between the prediction size of each of the at least one calibration object under the set of prediction calibration parameters and the known calibration size of each of the at least one calibration object, the deviation value corresponding to the set of prediction calibration parameters, is specifically configured to:

when a calibration object is provided on the motion mechanism, determine a deviation value corresponding to the calibration object as the deviation value corresponding to the set of prediction calibration parameters; when a plurality of calibration objects are provided on the motion mechanism, determine a sum of deviation values corresponding to the plurality of calibration objects as the deviation value corresponding to the set of prediction calibration parameters.

In an embodiment, each of the at least one calibration object includes at least one designated side, the known calibration size includes a calibration side length of each of the at least one designated side, and the prediction size includes a prediction side length of each of the at least one designated side; the prediction size determination unit 902, when calculating the deviation value between the prediction size of the calibration object under the set of prediction calibration parameters and the known calibration size of the calibration object, is specifically configured to:

calculate a deviation value between the prediction side length, under the set of prediction calibration parameters, of each of the at least one designated side of the calibration object and the calibration side length thereof, and determine a sum of deviation value corresponding to the at least one designated side of the calibration object as the deviation value corresponding to the calibration object.

In an embodiment, the calibration object is a cuboid, and the at least one designated side includes a length, a width and a height of the cuboid.

In an embodiment, each of the plurality of sets of prediction calibration parameters includes: an x-axis rotation transformation parameter $\alpha$, a y-axis rotation transformation parameter $\beta$, a z-axis rotation transformation parameter $\gamma$, an x-axis translation transformation parameter tx, a y-axis translation transformation parameter ty, and a z-axis translation transformation parameter tz between the first coordinate system and the second coordinate system, and a movement speed of the motion mechanism.

The prediction size determination unit 902, when performing the specified operation on the set of prediction calibration parameters and the scan data output by the line laser device when scanning the calibration object, so as to obtain the prediction coordinate corresponding to the calibration object under the set of prediction calibration parameters, is specifically configured to:

determine a rotation transformation matrix for the set of prediction calibration parameters by the following formula:

$$\begin{bmatrix} r11 & r12 & r13 \\ r21 & r22 & r23 \\ r31 & r32 & r33 \end{bmatrix} = \begin{bmatrix} \cos\beta\cos\gamma & \cos\gamma\sin\alpha\sin\beta - \cos\alpha\sin\gamma & \sin\alpha\sin\gamma + \cos\alpha\cos\gamma\sin\beta \\ \cos\beta\sin\gamma & \cos\alpha\cos\gamma + \sin\alpha\sin\beta\sin\gamma & \cos\alpha\sin\beta\sin\gamma - \cos\gamma\sin\gamma \\ -\sin g\gamma & \cos\beta\sin\alpha & \cos\alpha\cos\beta \end{bmatrix}$$

for the scan data corresponding to the calibration object, determine, based on the rotation transformation matrix determined under the set of prediction calibration parameters, the prediction coordinate (x2, y2, z2) by the following formula:

$$\begin{bmatrix} x2 \\ y20 \\ z2 \\ 1 \end{bmatrix} = \begin{bmatrix} r11 & r12 & r13 & tx \\ r21 & r22 & r23 & ty \\ r31 & r32 & r33 & tz \\ 0 & 0 & 0 & 1 \end{bmatrix} \begin{bmatrix} x1 \\ y1 \\ z1 \\ 1 \end{bmatrix};$$

$$y2 = y20 + \Delta T * speed;$$

where (x1, y1, z1) represents the coordinate information in the scan data corresponding to the calibration object; where $\Delta T$ represents a time difference between time information corresponding to the scan data corresponding to the calibration object and time information corresponding to a first set of scan data.

For details about the implementation process of the functions and effects of the units in the above apparatus, reference can be made to the implementation process of the corresponding steps in the above method, details of which will not be repeated herein.

Since embodiments of the apparatus substantially corresponds to embodiments of the method, relevant parts may be referred to the description of the embodiments of the method. The examples of apparatuses described above are merely illustrative and the units described as separate components may be or not be physically separated, and the components displayed as units may be or not be physical units, i.e., may be located in one place, or may be distributed to a plurality of network units. Some or all of these modules can be selected according to actual needs to achieve the objective of the solution of the present disclosure. It may be understood and implemented by those skilled in the art without creative work.

The systems, devices, modules or units illustrated in the above embodiments can be implemented specifically by a computer chip or entity, or by a product with a certain functionality. A typical implementation device is a computer, and the specific form of the computer can be a personal computer, a laptop computer, a cellular phone, a camera phone, a smart phone, a personal digital assistant, a media player, a navigation device, an e-mail sending and receiving device, a game console, a tablet computer, a wearable device or a combination of any of these devices.

Corresponding to the foregoing embodiments of the system calibration method for line laser device, the present disclosure also provides a system calibration device for line laser device including: a processor and a memory for storing machine-executable instructions. The processor and the memory are typically interconnected by means of an internal bus. In other possible implementations, the device can further include an external interface to enable communication with other devices or components.

In this embodiment, the machine-executable instructions corresponding to system calibration for a line laser device, when read and executed by the processor, cause the processor to perform operations including:

obtaining scan data when the line laser device scans the at least one calibration object at different scan time points during a process of the motion mechanism driving the at least one calibration object to pass through the laser line region range, where for each of the at least one calibration object, the scan data includes scan time information and coordinate information of at least one position point on the calibration object scanned by the line laser device in a second coordinate system, and the second coordinate system is a coordinate system in which the line laser device is located; and

predicting, based on the scan data of the at least one calibration object, and a plurality of sets of prediction calibration parameters predicted for system calibration of the line laser device, a prediction size of each of the at least one calibration object, and determining, based on the prediction size and the known calibration size of each of the at least one calibration object, target calibration parameters, for the system calibration of the line laser device, from the plurality of sets of prediction calibration parameters.

Corresponding to the foregoing embodiments of the systematic calibration method for line laser device, the present disclosure further provides a computer-readable storage medium storing computer programs, and the computer programs, when executed by a processor, cause the processor to perform operations including:

obtaining scan data when the line laser device scans the at least one calibration object at different scan time points during a process of the motion mechanism driving the at least one calibration object to pass through the laser line region range, where for each of the at least one calibration object, the scan data includes scan time information and coordinate information of at least one position point on the calibration object scanned by the line laser device in a second coordinate system, and the second coordinate system is a coordinate system in which the line laser device is located; and

predicting, based on the scan data of the at least one calibration object, and a plurality of sets of prediction calibration parameters predicted for system calibration of the line laser device, a prediction size of each of the at least one calibration object, and determining, based on the prediction size and the known calibration size of each of the at least one calibration object, target calibration parameters, for the system calibration of the line laser device, from the plurality of sets of prediction calibration parameters.

The embodiments of the present disclosure are described above. Other implementations are within the scope of the following claims. In some cases, the actions or steps recited in the claims may be performed in a different order than in the embodiments and the desired result may still be achieved. In addition, the processes depicted in the drawings do not necessarily require the particular sequence or successive sequences shown in order to achieve the desired results. In some embodiments, multitasking and parallel processing are also possible or may be advantageous.

The foregoing are only the preferred embodiments of the present disclosure, and are not intended to limit the present disclosure. Any modification, equivalent replacement, improvement, etc. made within the spirit and principles of the present disclosure shall be included in the scope of the present disclosure.

**Claims**

1. A system calibration method for line laser device, for calibrating a relationship between a line laser device and a motion mechanism, wherein at least one calibration object which has a known calibration size in a first coordinate system is provided on the motion mechanism, the first coordinate system is a coordinate system in which the motion mechanism is located, and an initial position of the at least one calibration object on the motion mechanism is outside a laser line region range of the line laser device, the method comprising:

obtaining scan data when the line laser device scans the at least one calibration object at different scan time points during a process of the motion mechanism driving the at least one calibration object to pass through the laser line region range, wherein for each of the at least one calibration object, the scan data comprises scan time information and coordinate information of at least one position point on the calibration object scanned by the line laser device in a second coordinate system, and the second coordinate system is a coordinate system in which the line laser device is located; and

predicting, based on the scan data of the at least one calibration object, and a plurality of sets of prediction calibration parameters predicted for system calibration of the line laser device, a prediction size of each of the at least one calibration object, and determining, based on the prediction size and the known calibration size of each of the at least one calibration object, target calibration parameters, for the system calibration of the line laser device, from the plurality of sets of prediction calibration parameters.

2. The method of claim 1, wherein predicting, based on the scan data of the at least one calibration object, and the plurality of sets of prediction calibration parameters predicted for the system calibration of the line laser device, the prediction size of each of the at least one calibration object, and determining, based on the prediction size and the known calibration size of each of the at least one calibration object, the target calibration parameters, for the system calibration of the line laser device, from the plurality of sets of prediction calibration parameters comprise:

   for each of the at least one calibration object, predicting, based on the scan data of the calibration object, and the plurality of sets of prediction calibration parameters, a prediction size of the calibration object under each set of the plurality of sets of prediction calibration parameters;
   for each set of the plurality of sets of prediction calibration parameters and each of the at least one calibration object, calculating a deviation value between the prediction size of the calibration object under the set of prediction calibration parameters and the known calibration size of the calibration object, and determining, based on the deviation value between the prediction size of each of the at least one calibration object under the set of prediction calibration parameters and the known calibration size of each of the at least one calibration object, a deviation value corresponding to the set of prediction calibration parameters; and
   determining a minimum deviation value among deviation values corresponding to the plurality of sets of prediction calibration parameters, and determining a set of prediction calibration parameters corresponding to the minimum deviation value as the target calibration parameters.

3. The method of claim 1, wherein predicting, based on the scan data of the at least one calibration object, and the plurality of sets of prediction calibration parameters predicted for the system calibration of the line laser device, the prediction size of each of the at least one calibration object, and determining, based on the prediction size and the known calibration size of each of the at least one calibration object, the target calibration parameters, for the system calibration of the line laser device, from the plurality of sets of prediction calibration parameters comprise:

   determining, based on a value range and a first preset step size corresponding to each of a plurality of types of prediction calibration parameters, the plurality of sets of prediction calibration parameters, wherein each set of the plurality of sets of prediction calibration parameters comprises a prediction calibration parameter value corresponding to each of the plurality of types of prediction calibration parameters;
   for each of the at least one calibration object, predicting, based on the scan data of the calibration object, and the plurality of sets of prediction calibration parameters, a prediction size of the calibration object under each set of the plurality of sets of prediction calibration parameters;
   for each set of the plurality of sets of prediction calibration parameters and each of the at least one calibration object, calculating a deviation value between the prediction size of the calibration object under the set of prediction calibration parameters and the known calibration size of the calibration object, and determining, based on the deviation value between the prediction size of each of the at least one calibration object under the set of prediction calibration parameters and the known calibration size of each of the at least one calibration object, a deviation value corresponding to the set of prediction calibration parameters;
   determining a minimum deviation value among deviation values corresponding to the plurality of sets of prediction calibration parameters, and determining a set of prediction calibration parameters corresponding to the minimum deviation value as a set of candidate calibration parameters;
   for each of the plurality of types of prediction calibration parameters, determining, based on a prediction calibration parameter value, corresponding to the type of prediction calibration parameter, of the set of candidate calibration parameters, and a second preset step size corresponding to the type of prediction calibration parameter, a set of parameter values corresponding to the type of prediction calibration parameter, wherein the second preset step size is smaller than the first preset step size corresponding to the type of prediction calibration parameter;
   forming, based on the set of parameter values corresponding to each of the plurality of types of prediction calibration parameters, a plurality of sets of new prediction calibration parameters, wherein prediction calibration parameter values of the plurality of sets of new prediction calibration parameters are not completely the same;
   re-performing, based on the plurality of sets of new prediction calibration parameters, steps of: for each of the at least one calibration object, predicting, based on the scan data of the calibration object, and the plurality of sets of prediction calibration parameters, the prediction size of the calibration object under each set of the plurality of sets of prediction calibration parameters; for each set of the plurality of sets of prediction calibration parameters and each of the at least one calibration object, calculating the deviation value between the prediction size of the calibration object under the set of prediction calibration parameters and the known calibration size of the calibration object, and determining, based on the deviation value between the prediction size of each of the at least one calibration object under the set of prediction calibration parameters and the known calibration size of each of the at least one calibration object, the deviation value corresponding to the set of prediction calibration parameters; and determining the minimum deviation value among deviation values corresponding to the plurality of sets of prediction calibration parameters; and

determining, when a re-determined minimum deviation value is less than a preset threshold, a set of prediction calibration parameters corresponding to the re-determined minimum deviation value as the target calibration parameters.

4. The method of claim 3, wherein determining, based on the value range and the first preset step size corresponding to each of the plurality of types of prediction calibration parameters, the plurality of sets of prediction calibration parameters comprises:

for each of the plurality of types of prediction calibration parameters, determining the value range and the first preset step size corresponding to the type of prediction calibration parameter, and selecting, based on the first preset step size, at least one prediction calibration parameter value from the value range, to form the set of parameter values corresponding to the type of prediction calibration parameter; and

forming, based on the set of parameter values corresponding to each of the plurality of types of prediction calibration parameters, the plurality of sets of prediction calibration parameters, wherein prediction calibration parameter values of the plurality of sets of prediction calibration parameters are not completely the same; wherein for each of the plurality of types of prediction calibration parameters, determining, based on the prediction calibration parameter value, corresponding to the type of prediction calibration parameter, of the set of candidate calibration parameters, and a second preset step size corresponding to the type of prediction calibration parameter, the set of parameter values corresponding to the type of prediction calibration parameter comprises: for each of the plurality of types of prediction calibration parameters, obtaining, by taking values, in directions of numerical value increase and numerical value decrease respectively, with the prediction calibration parameter value, corresponding to the type of prediction calibration parameter, of the set of candidate calibration parameters as a reference and with the second preset step size corresponding to the type of prediction calibration parameter as an interval, a preset number of prediction calibration parameter values as the set of parameter values corresponding to the type of prediction calibration parameter, wherein the second preset step size is smaller than the first preset step size corresponding to the type of prediction calibration parameter.

5. The method of claim 3 or 4, wherein forming, based on the set of parameter values corresponding to each of the plurality of types of prediction calibration parameters, the plurality of sets of new prediction calibration parameters comprises:

forming, based on sets of parameter values corresponding to N types of prediction calibration parameters, M sets of prediction calibration parameters, wherein $M=A1 * A2 * ... * AN$;

wherein Ai (i=1, 2, ... ,N) represents a number of parameter values contained in the set of parameter values corresponding to the type of prediction calibration parameter;

wherein each set of the M sets of prediction calibration parameters is formed by selecting a prediction calibration parameter value from the set of parameter values corresponding to each of N types of prediction calibration parameters.

6. The method of claim 2 or 3, wherein predicting, based on the scan data of the calibration object, and the plurality of sets of prediction calibration parameters, a prediction size of the calibration object under each set of the plurality of sets of prediction calibration parameters comprises:

for each set of the plurality of sets of prediction calibration parameters, performing a specified operation on the set of prediction calibration parameters and the scan data output by the line laser device when scanning the calibration object, so as to obtain a prediction coordinate corresponding to the calibration object under the set of prediction calibration parameters, wherein the prediction coordinate is a coordinate based on the first coordinate system; and

predicting, based on the prediction coordinate corresponding to the calibration object under the set of prediction calibration parameters, a prediction size of the calibration object under the set of prediction calibration parameters.

7. The method of claim 2 or 3, wherein determining, based on the deviation value between the prediction size of each of the at least one calibration object under the set of prediction calibration parameters and the known calibration size of each of the at least one calibration object, the deviation value corresponding to the set of prediction calibration parameters comprises:

when a calibration object is provided on the motion mechanism, determining a deviation value corresponding to the calibration object as the deviation value corresponding to the set of prediction calibration parameters; when a plurality of calibration objects are provided on the motion mechanism, determining a sum of deviation values corresponding to the plurality of calibration objects as the deviation value corresponding to the set of prediction calibration parameters.

8. The method of claim 7, wherein each of the at least one calibration object comprises at least one designated side, the known calibration size comprises a calibration side length of each of the at least one designated side, and the prediction size comprises a prediction side length of each of the at least one designated side;
wherein calculating the deviation value between the prediction size of the calibration object under the set of prediction calibration parameters and the known calibration size of the calibration object comprises:
calculating a deviation value between the prediction side length, under the set of prediction calibration parameters, of each of the at least one designated side of the calibration object and the calibration side length thereof, and determining a sum of deviation value corresponding to the at least one designated side of the calibration object as the deviation value corresponding to the calibration object.

9. The method of claim 8, wherein the calibration object is a cuboid, and the at least one designated side comprises a length, a width and a height of the cuboid.

10. The method of claim 6, wherein each of the plurality of sets of prediction calibration parameters comprises:

an x-axis rotation transformation parameter $\alpha$, a y-axis rotation transformation parameter $\beta$, a z-axis rotation transformation parameter $\gamma$, an x-axis translation transformation parameter tx, a y-axis translation transformation parameter ty, and a z-axis translation transformation parameter tz between the first coordinate system and the second coordinate system, and a movement speed of the motion mechanism;
wherein performing the specified operation on the set of prediction calibration parameters and the scan data output by the line laser device when scanning the calibration object, so as to obtain the prediction coordinate corresponding to the calibration object under the set of prediction calibration parameters comprises:

determining a rotation transformation matrix for the set of prediction calibration parameters by the following formula:

$$\begin{bmatrix} r11 & r12 & r13 \\ r21 & r22 & r23 \\ r31 & r32 & r33 \end{bmatrix} = \begin{bmatrix} \cos\beta\cos\gamma & \cos\gamma\sin\alpha\sin\beta - \cos\alpha\sin\gamma & \sin\alpha\sin\gamma + \cos\alpha\cos\gamma\sin\beta \\ \cos\beta\sin\gamma & \cos\alpha\cos\gamma + \sin\alpha\sin\beta\sin\gamma & \cos\alpha\sin\beta\sin\gamma - \cos\gamma\sin\gamma \\ -\sin\gamma & \cos\beta\sin\alpha & \cos\alpha\cos\beta \end{bmatrix};$$

for the scan data corresponding to the calibration object, determining, based on the rotation transformation matrix determined under the set of prediction calibration parameters, the prediction coordinate (x2, y2, z2) by the following formula:

$$\begin{bmatrix} x2 \\ y20 \\ z2 \\ 1 \end{bmatrix} = \begin{bmatrix} r11 & r12 & r13 & tx \\ r21 & r22 & r23 & ty \\ r31 & r32 & r33 & tz \\ 0 & 0 & 0 & 1 \end{bmatrix} \begin{bmatrix} x1 \\ y1 \\ z1 \\ 1 \end{bmatrix},$$

$$y2 = y20 + \Delta T * \text{speed};$$

wherein (x1, y1, z1) represents the coordinate information in the scan data corresponding to the calibration object;
$\Delta T$ represents a time difference between time information corresponding to the scan data corresponding to the calibration object and time information corresponding to a first set of scan data.

11. A system calibration apparatus for line laser device, for calibrating a relationship between a line laser device and a motion mechanism, wherein at least one calibration object which has a known calibration size in a first coordinate system is provided on the motion mechanism, the first coordinate system is a coordinate system in which the motion mechanism is located, and an initial position of the at least one calibration object on the motion mechanism is outside a laser line region range of the line laser device, the apparatus comprising:

a scan data obtaining unit, configured to obtain scan data when the line laser device scans the at least one calibration object at different scan time points during a process of the motion mechanism driving the at least one calibration object to pass through the laser line region range, wherein for each of the at least one calibration object, the scan data comprises scan time information and coordinate information of at least one position point on the calibration object scanned by the line laser device in a second coordinate system, and the second coordinate system is a coordinate system in which the line laser device is located; and

a calibration parameter determination unit, configured to predict, based on the scan data of the at least one calibration object, and a plurality of sets of prediction calibration parameters predicted for system calibration of the line laser device, a prediction size of each of the at least one calibration object, and determine, based on the prediction size and the known calibration size of each of the at least one calibration object, target calibration parameters, for the system calibration of the line laser device, from the plurality of sets of prediction calibration parameters.

12. An electronic device, comprising:

a processor; and
a memory for storing machine-executable instructions;
wherein the machine-executable instructions corresponding to system calibration for a line laser device, when read and executed by a processor, cause the processor to perform the system calibration method for line laser device of any one of claims 1 to 10.

FIG. 1

FIG. 2a

FIG. 2b

S301

Obtain scan data when the line laser device scans the at least one calibration object at different scan time points during a process of the motion mechanism driving the at least one calibration object through the laser line region range

S302

Predict, based on the scan data of the at least one calibration object, and a plurality of sets of prediction calibration parameters predicted for system calibration of the line laser device, a prediction size of each of the at least one calibration object, and determine, based on the prediction size and the known calibration size of each of the at least one calibration object, target calibration parameters, for the system calibration of the line laser device, from the plurality of sets of prediction calibration parameters

FIG. 3

S401

Predict, based on the scan data of the calibration object, and the plurality of sets of prediction calibration parameters, a prediction size of the calibration object under each set of the plurality of sets of prediction calibration parameters

S402

For each set of the plurality of sets of prediction calibration parameters and each of the at least one calibration object, calculate a deviation value between the prediction size of the calibration object under the set of prediction calibration parameters and the known calibration size of the calibration object

S403

Determine a minimum deviation value among deviation values corresponding to the plurality of sets of prediction calibration parameters, and determine a set of prediction calibration parameters corresponding to the minimum deviation value as the target calibration parameters

FIG. 4

S501

Determine, based on a value range and a first preset step size corresponding to each of a plurality of types of prediction calibration parameters, the plurality of sets of prediction calibration parameters

S502

Predict, based on the scan data of the calibration object, and the plurality of sets of prediction calibration parameters, a prediction size of the calibration object under each set of the plurality of sets of prediction calibration parameters

S503

For each set of the plurality of sets of prediction calibration parameters and each of the at least one calibration object, calculate a deviation value between the prediction size of the calibration object under the set of prediction calibration parameters and the known calibration size of the calibration object

S504

Determine a minimum deviation value among deviation values corresponding to the plurality of sets of prediction calibration parameters, and determining a set of prediction calibration parameters corresponding to the minimum deviation value as a set of candidate calibration parameters

S505

For each of the plurality of types of prediction calibration parameters, determine, based on a prediction calibration parameter value, corresponding to the type of prediction calibration parameter, of the set of candidate calibration parameters, and a second preset step size corresponding to the type of prediction calibration parameter, a set of parameter values corresponding to the type of prediction calibration parameter

S506

Form, based on the set of parameter values corresponding to each of the plurality of types of prediction calibration parameters, a plurality of sets of new prediction calibration parameters, where prediction calibration parameter values of the plurality of sets of new prediction calibration parameters are not completely the same

S507

Re-perform, based on the plurality of sets of new prediction calibration parameters, steps of: for each of the at least one calibration object, predicting, based on the scan data of the calibration object, and the plurality of sets of prediction calibration parameters, the prediction size of the calibration object under each set of the plurality of sets of prediction calibration parameters; for each set of the plurality of sets of prediction calibration parameters and each of the at least one calibration object, calculating the deviation value between the prediction size of the calibration object under the set of prediction calibration parameters and the known calibration size of the calibration object; and determining the minimum deviation value among deviation values corresponding to the plurality of sets of prediction calibration parameters; and determine, when a re-determined minimum deviation value is less than a preset threshold, a set of prediction calibration parameters corresponding to the re-determined minimum deviation value as the target calibration parameters

FIG. 5

S5011

For each of the plurality of types of prediction calibration parameters, determine the value range and the first preset step size corresponding to the type of prediction calibration parameter, and select, based on the first preset step size, at least one prediction calibration parameter value from the value range, to form the set of parameter values corresponding to the type of prediction calibration parameter

S5012

Form, based on the set of parameter values corresponding to each of the plurality of types of prediction calibration parameters, the plurality of sets of prediction calibration parameters

FIG. 6

S4011

For each set of the plurality of sets of prediction calibration parameters, perform a specified operation on the set of prediction calibration parameters and the scan data output by the line laser device when scanning the calibration object, so as to obtain a prediction coordinate corresponding to the calibration object under the set of prediction calibration parameters, where the prediction coordinate is a coordinate based on the first coordinate system

S4012

Predict, based on the prediction coordinate corresponding to the calibration object under the set of prediction calibration parameters, a prediction size of the calibration object under the set of prediction calibration parameter

FIG. 7

Processor

Internal bus

Network
interface

Memory

System calibration
apparatus for line
laser device
900

Non-volatile storage
medium

System calibration
apparatus for line
laser device
900

Electronic device

FIG. 8

900

System calibration apparatus for
line laser device

901

Scan data obtaining
unit

902

Calibration parameter
determination unit

FIG. 9

# EP 4 403 896 A1

## INTERNATIONAL SEARCH REPORT

| International application No. |
| --- |
| **PCT/CN2022/116862** |

### A. CLASSIFICATION OF SUBJECT MATTER

G01M 11/00(2006.01)i

According to International Patent Classification (IPC) or to both national classification and IPC

### B. FIELDS SEARCHED

Minimum documentation searched (classification system followed by classification symbols)

G01M

Documentation searched other than minimum documentation to the extent that such documents are included in the fields searched

Electronic data base consulted during the international search (name of data base and, where practicable, search terms used)

CNABS, CNTXT, CNKI, 万方, WANFANG, 百度, BAIDU: 线激光, 相机, 摄像, 标准, 基准, 标定, 校验, 校准, 校定, 校正, 实际, 预期, 预设, 理想, 预测, 偏差, 误差, 偏移, 和, 尺寸, 边长, 面积, 体积, 坐标, 时间, 速度, 重合, 重叠, 贴合, 多, 平移, 旋转, 外部, 内部, 外参, 内参, 转换, 变换, 矩阵, 优化, 最佳, 最优, 最小, 目标, 传送带, 皮带, 运输, 运动, 输送, 移动, 范围, 区间, 步长; USTXT, JPTXT, EPTXT, VEN, IEEE: laser, camera, vidicon, standard, criterion, demarcate, standardization, calibrate, revise, adjust, practical, presuppose, ideal, deviation, bias, offset, error, sum, size, length, coordinate system, coincident, overlap, translation, rotate, matrix, transform, minimum, optimal, conveyor, belt, transport, range, step

### C. DOCUMENTS CONSIDERED TO BE RELEVANT

| Category* | Citation of document, with indication, where appropriate, of the relevant passages | Relevant to claim No. |
| --- | --- | --- |
| PX | CN 113884278 A (HANGZHOU HIKROBOT TECHNOLOGY CO., LTD.) 04 January 2022 (2022-01-04)<br>    claims 1-12, description, paragraphs 30-186, and figures 1-9 | 1-12 |
| Y | CN 111623727 A (QUANZHOU SHENSUOSI SENSOR TECHNOLOGY CO., LTD.) 04 September 2020 (2020-09-04)<br>    description, paragraphs 6-64, and figures 1-4 | 1-12 |
| Y | 位洪军 (WEI, Hongjun). "单线激光扫描三维测量技术研究 (Research on Three-dimensional Scanning Technology with a Single-line Laser)"<br>*中国优秀硕士学位论文全文数据库工程科技II辑 (Engineering Science and Technology II, China Master's Theses full-text database)*, No. 7, 15 July 2012 (2012-07-15), ISSN: 1674-0246,<br>    pages 8 and 27-42 | 1-12 |
| Y | CN 110221275 A (CAINIAO SMART LOGISTICS HOLDING LTD.) 10 September 2019 (2019-09-10)<br>    description, paragraphs 145-338, and figures 1-8 | 1-12 |

☑ Further documents are listed in the continuation of Box C.    ☑ See patent family annex.

| | |
| --- | --- |
| \*   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **15 November 2022** | **24 November 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

28

## INTERNATIONAL SEARCH REPORT

International application No.

**PCT/CN2022/116862**

### C.    DOCUMENTS CONSIDERED TO BE RELEVANT

| Category* | Citation of document, with indication, where appropriate, of the relevant passages | Relevant to claim No. |
|---|---|---|
| Y | CN 107564069 A (BEIJING JINGDONG SHANGKE INFORMATION TECHNOLOGY CO., LTD. et al.) 09 January 2018 (2018-01-09)<br>description, paragraphs 39-135, and figures 1-8 | 1-12 |
| A | CN 109297436 A (BEIJING VIZUM INTELLIGENT TECHNOLOGY CO., LTD.) 01 February 2019 (2019-02-01)<br>entire document | 1-12 |
| A | CN 111308448 A (HANGZHOU HIKVISION DIGITAL TECHNOLOGY CO., LTD.) 19 June 2020 (2020-06-19)<br>entire document | 1-12 |
| A | CN 110930463 A (BEIJING MEGVII TECHNOLOGY CO., LTD.) 27 March 2020 (2020-03-27)<br>entire document | 1-12 |
| A | CN 111190153 A (SHANGHAI GAUSSIAN AUTOMATION TECHNOLOGY DEVELOPMENT CO., LTD.) 22 May 2020 (2020-05-22)<br>entire document | 1-12 |
| A | CN 113375566 A (JIANGSU ZHONGKEGUANWEI AUTOMATION TECHNOLOGY CO., LTD.) 10 September 2021 (2021-09-10)<br>entire document | 1-12 |
| A | CN 107767422 A (ARKMICRO TECHNOLOGIES (SHENZHEN) CO., LTD.) 06 March 2018 (2018-03-06)<br>entire document | 1-12 |
| A | CN 109990698 A (GUANGZHOU ZHIXIN TECHNOLOGY CO., LTD.) 09 July 2019 (2019-07-09)<br>entire document | 1-12 |
| A | JP 2005017286 A (MITSUBISHI ELECTRIC CORP.) 20 January 2005 (2005-01-20)<br>entire document | 1-12 |

Form PCT/ISA/210 (second sheet) (January 2015)

**INTERNATIONAL SEARCH REPORT**
Information on patent family members

International application No.

**PCT/CN2022/116862**

| Patent document cited in search report | | | Publication date (day/month/year) | Patent family member(s) | | | Publication date (day/month/year) |
|---|---|---|---|---|---|---|---|
| CN | 113884278 | A | 04 January 2022 | None | | | |
| CN | 111623727 | A | 04 September 2020 | CN | 111623727 | B | 06 August 2021 |
| CN | 110221275 | A | 10 September 2019 | WO | 2020233443 | A1 | 26 November 2020 |
| CN | 107564069 | A | 09 January 2018 | CN | 107564069 | B | 29 September 2020 |
| CN | 109297436 | A | 01 February 2019 | CN | 109297436 | B | 23 November 2021 |
| CN | 111308448 | A | 19 June 2020 | None | | | |
| CN | 110930463 | A | 27 March 2020 | None | | | |
| CN | 111190153 | A | 22 May 2020 | CN | 111190153 | B | 25 August 2020 |
| CN | 113375566 | A | 10 September 2021 | None | | | |
| CN | 107767422 | A | 06 March 2018 | CN | 107767422 | B | 05 April 2022 |
| CN | 109990698 | A | 09 July 2019 | None | | | |
| JP | 2005017286 | A | 20 January 2005 | JP | 4234059 | B2 | 04 March 2009 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111088009